# EUROPEAN PATENT APPLICATION

(11) **EP 4 841 539 A1**
(43) Date of publication of application: **18.11.2026**
(21) Application number: 24924753.7
(22) Date of filing: 16.02.2024
(51) Int. Cl.: G06Q 10/20

(54) **INFORMATION COLLECTION SYSTEM, REQUEST DEVICE, INFORMATION COLLECTION METHOD, AND INFORMATION COLLECTION PROGRAM**

(71) Applicant: Mitsubishi Electric Corporation, Tokyo 100-8310 (JP); Mitsubishi Electric Building Solutions Corporation, Tokyo 100-0006 (JP)
(72) Inventor: KOIZUMI, Kenichi, Tokyo 100-8310 (JP); ABE, Masaya, Tokyo 100-0006 (JP); KIMURA, Hiroaki, Tokyo 100-0006 (JP); IWATA, Takuya, Tokyo 100-0006 (JP)
(74) Representative: Plasseraud IP
(86) International application number: PCT/JP2024/005420
(87) International publication number: WO 2025/173216

(57) **Abstract**

A matching unit (212) selects, as a collection request destination, a collection device that meets a request destination condition, which is a condition for a request destination to which collection of equipment information of target equipment is to be requested, based on a plurality of pieces of attribute information corresponding to a plurality of collection devices. A request unit (213) transmits a collection request to request collection of the equipment information to the collection request destination.

## Description

### Technical Field

The present disclosure relates to a method for collecting information on remote equipment.

### Background Art

A method for mediating digital data has been proposed.

Patent Literature 1 discloses the following method.

Each photographer accesses a server of a service provider from a terminal, and registers shooting acceptance information.

A requester accesses the server of the service provider from a home terminal, and registers request information.

The requester operates the home terminal to select a photographer to whom the requester wishes to make a shooting request based on the shooting acceptance information registered for each photographer. Specifically, the requester selects a photographer who is located at a desired location.

The selected photographer conducts shooting, and registers footage on the server of the service provider.

The requester receives the footage from the server of the service provider and sends a reward to the photographer.

The method disclosed in Patent Literature 1 makes it possible for the requester to make a request for shooting remote equipment to the photographer located near the equipment.

However, the method disclosed in Patent Literature 1 has the following problems.

If the equipment is located in a restricted access area, requesting the photographer who is near the equipment to conduct shooting may potentially lead to trespassing. This causes a legal risk for the photographer.

If shooting of the same equipment is to be conducted multiple times, the requestor needs to make multiple requests. Therefore, it takes time and effort to make requests.

If appropriate footage has not been registered, and the requestor verifies the footage and requests re-shooting, it may take time until a request for re-shooting is made, and the photographer may leave the equipment. Therefore, it takes time and effort to move for re-shooting.

### Citation List Patent Literature

Patent Literature 1: JP 2008-217831 A

### Summary of Invention

### Technical Problem

An object of the present disclosure is to make it possible to automatically make a request for collection of equipment information to an appropriate request destination.

### Solution to Problem

An information collection system of the present disclosure includes
a matching unit to select, as a collection request destination, a collection device that meets a request destination condition, which is a condition for a request destination to which collection of equipment information of target equipment is to be requested, based on a plurality of pieces of attribute information corresponding to a plurality of collection devices; and
a request unit to transmit a collection request to request collection of the equipment information to the collection request destination.

### Advantageous Effects of Invention

According to the present disclosure, it is possible to automatically make a request for collection of equipment information to an appropriate request destination.

### Brief Description of Drawings

Fig. 1 is a configuration diagram of an information collection system 100 in Embodiment 1.
Fig. 2 is a functional configuration diagram of the information collection system 100 in Embodiment 1.
Fig. 3 is a configuration diagram of a request device 200 in Embodiment 1.
Fig. 4 is a configuration diagram of a management device 300 in Embodiment 1.
Fig. 5 is a configuration diagram of a collection device 400 in Embodiment 1.
Fig. 6 is a flowchart of an information collection method in Embodiment 1.
Fig. 7 is a diagram illustrating an example of a configuration of the information collection system 100 in Embodiment 1.
Fig. 8 is a diagram illustrating an example of a functional configuration of the information collection system 100 in Embodiment 1.
Fig. 9 is a hardware configuration diagram of the request device 200 in Embodiment 1.
Fig. 10 is a hardware configuration diagram of the management device 300 in Embodiment 1.
Fig. 11 is a hardware configuration diagram of the collection device 400 in

### Embodiment 1.

### Description of Embodiments

In the embodiment and drawings, the same elements or corresponding elements are denoted by the same reference sign. Description of an element denoted by the same reference sign as that of an element that has been described will be suitably omitted or simplified. Arrows in diagrams mainly indicate flows of data or flows of processing.

### Embodiment 1.

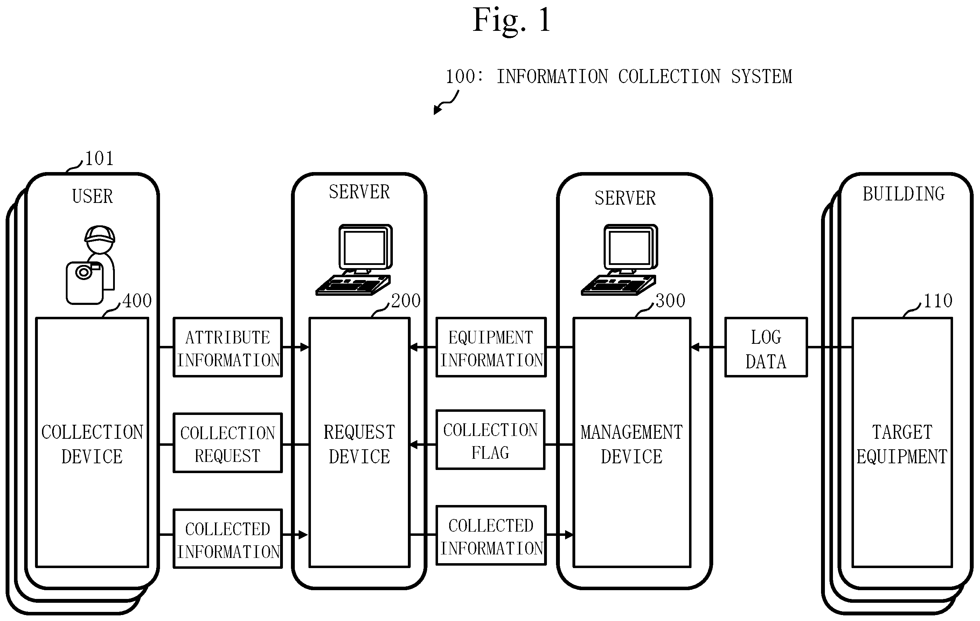

An information collection system 100 will be described based on Figs. 1 to 11.

### *** Description of Configuration ***

Based on Fig. 1, a configuration of the information collection system 100 will be described.

The information collection system 100 includes one or more pieces of target equipment 110, a request device 200, a management device 300, and a plurality of collection devices 400.

The target equipment 110 is equipment from which equipment information is collected.

The target equipment 110 is installed, for example, in a building. Examples of the target equipment 110 are an elevator, an air conditioner, light fixtures, a processing machine, wiring, water pipes, gas pipes, automatic doors, audio equipment, a measurement meter, a control panel, and a camera. The target equipment 110 may also be a vehicle or the like.

The request device 200 is implemented, for example, as a server device.

The management device 300 is implemented, for example, as a server device.

The collection device 400 is a device (collection device) for collecting information (equipment information) on the target equipment 110.

Specifically, the collection device 400 is a terminal owned by a user 101. The user 101 is a person (owner) who owns the collection device 400. For example, a smartphone of the user 101 is used as the collection device 400.

If the target equipment 110 is an elevator in an apartment building, a resident of the apartment building, for example, acts as the user 101 in place of a maintenance worker to collect information on the elevator using the smartphone in order to inspect the elevator.

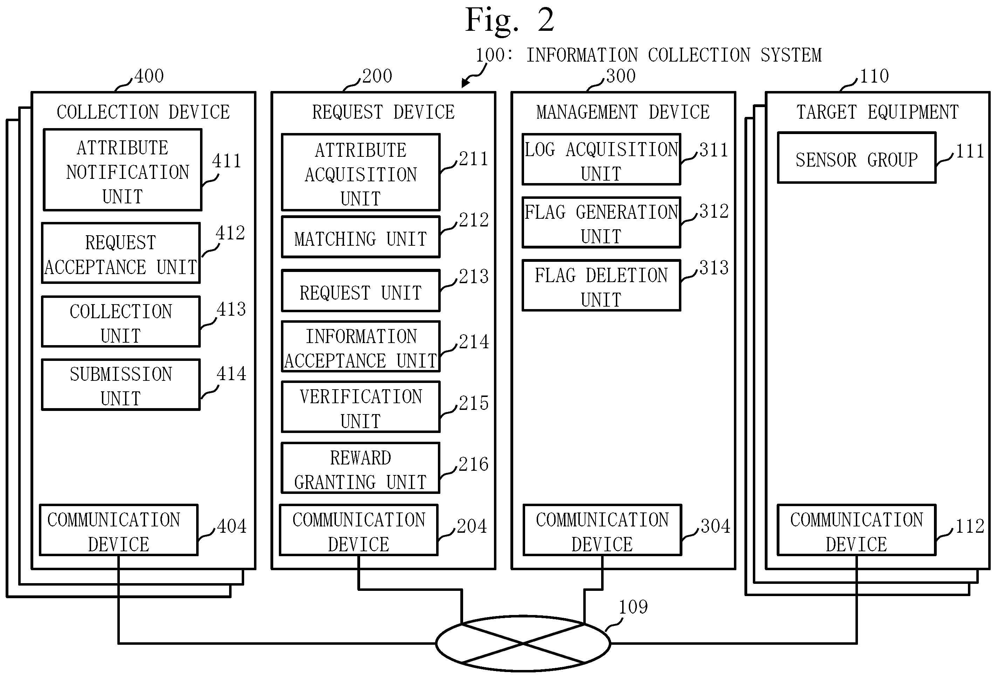

Fig. 2 illustrates a functional configuration of the information collection system 100.

The target equipment 110 includes a sensor group 111 and a communication device 112.

The sensor group 111 is composed of one or more sensors. For example, the sensor group 111 includes a microphone and a 3-axis acceleration sensor.

Each of the request device 200, the management device 300, and the collection device 400 includes a communication device (204, 304, 404).

The target equipment 110, the request device 200, the management device 300, and the collection device 400 communicate with each other via a communication network 109.

Specifically, the management device 300 communicates with the target equipment 110 and the request device 200. The request device 200 communicates with the collection device 400.

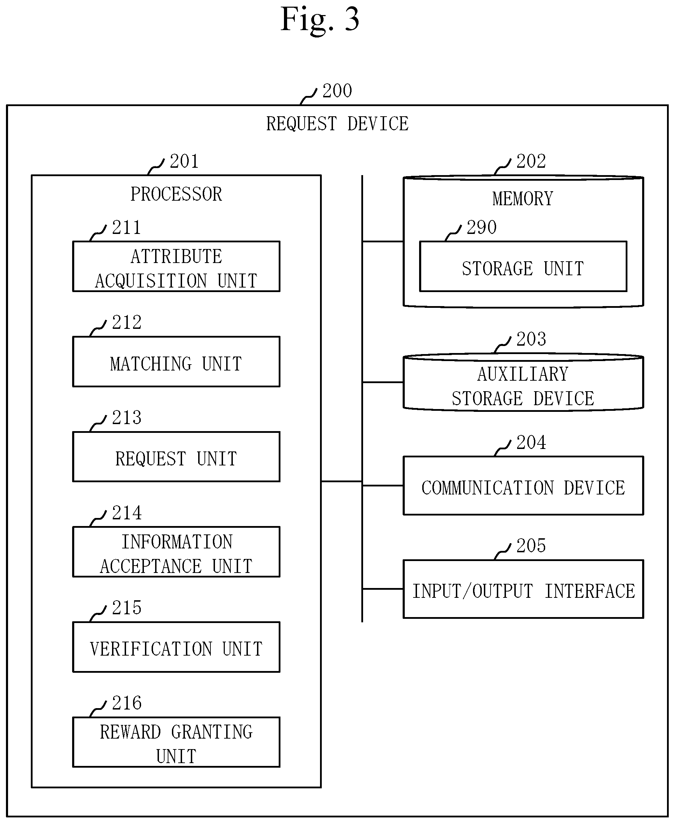

Based on Fig. 3, a configuration of the request device 200 will be described.

The request device 200 is a computer that includes hardware such as a processor 201, a memory 202, an auxiliary storage device 203, a communication device 204, and an input/output interface 205. These hardware components are connected with one another through signal lines.

The processor is an IC that performs operational processing, and controls other hardware components. The processor is a CPU.

IC is an abbreviation for integrated circuit.

CPU is an abbreviation for central processing unit.

The memory is a volatile or non-volatile storage device. The memory is also called a main storage device or a main memory. For example, the memory is a RAM.

RAM is an abbreviation for random access memory.

Data saved in the memory 202 is stored in the auxiliary storage device 203 as needed.

The auxiliary storage device is a non-volatile storage device. For example, the auxiliary storage device is a ROM, an HDD, a flash memory, or a combination of these.

ROM is an abbreviation for read only memory.

HDD is an abbreviation for hard disk drive.

Data stored in the auxiliary storage device 203 is loaded into the memory 202 as needed.

The communication device 204 is a receiver and a transmitter. For example, the communication device 204 is a communication chip or a NIC.

NIC is an abbreviation for network interface card.

The request device 200 communicates using the communication device 204.

The input/output interface is a port to which an input device and an output device are connected. For example, the input/output interface is a USB port.

USB is an abbreviation for Universal Serial Bus.

Input to and output from the request device 200 are performed using the input/output interface 205.

The request device 200 includes elements such as an attribute acquisition unit 211, a matching unit 212, a request unit 213, an information acceptance unit 214, a verification unit 215, and a reward granting unit 216. These elements are realized by software.

The auxiliary storage device 203 stores a request program to cause a computer to function as the attribute acquisition unit 211, the matching unit 212, the request unit 213, the information acceptance unit 214, the verification unit 215, and the reward granting unit 216. The request program is loaded into the memory 202 and executed by the processor 201.

The auxiliary storage device 203 further stores an OS. At least part of the OS is loaded into the memory 202 and executed by the processor 201.

The processor 201 executes the request program while executing the OS.

OS is an abbreviation for operating system.

Data (input data, output data, etc.) of the request program is stored in a storage unit 290.

The memory 202 functions as the storage unit 290. However, storage devices such as the auxiliary storage device 203, a register within the processor 201, and a cache memory within the processor 201 may function as the storage unit 290 in place of the memory 202 or in conjunction with the memory 202.

The request program can be recorded (stored) in a computer readable format in a non-volatile recording medium such as an optical disc or a flash memory.

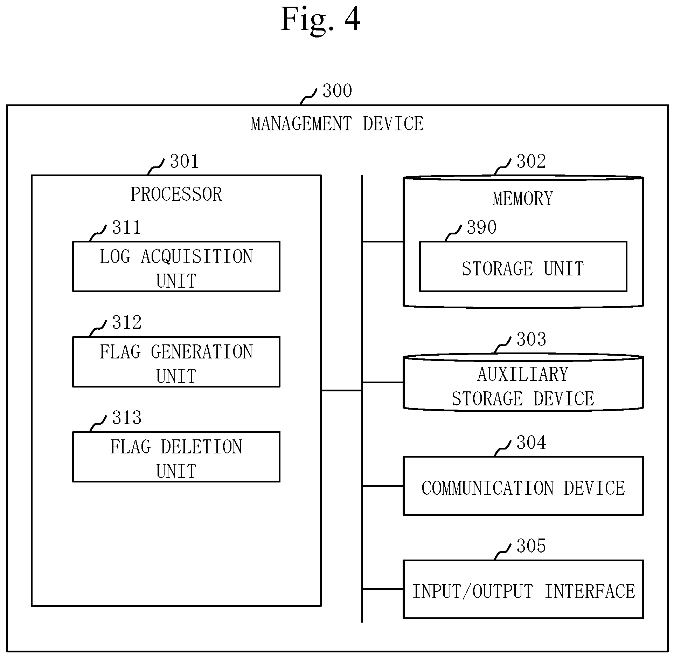

Based on Fig. 4, a configuration of the management device 300 will be described.

The management device 300 is a computer that includes hardware such as a processor 301, a memory 302, an auxiliary storage device 303, a communication device 304, and an input/output interface 305. These hardware components are connected with one another through signal lines.

Data saved in the memory 302 is stored in the auxiliary storage device 303 as needed.

Data stored in the auxiliary storage device 303 is loaded in the memory 302 as needed.

The management device 300 communicates using the communication device 304.

Input to and output from the management device 300 are performed using the input/output interface 305.

The management device 300 includes elements such as a log acquisition unit 311, a flag generation unit 312, and a flag deletion unit 313. These elements are realized by software.

The auxiliary storage device 303 stores a management program to cause a computer to function as the log acquisition unit 311, the flag generation unit 312, and the flag deletion unit 313. The management program is loaded into the memory 302 and executed by the processor 301.

The auxiliary storage device 303 further stores an OS. At least part of the OS is loaded into the memory 302 and executed by the processor 301.

The processor 301 executes the management program while executing the OS.

Input data and output data of the management program are stored in a storage unit 390.

The memory 302 functions as the storage unit 390. However, storage devices such as the auxiliary storage device 303, a register within the processor 301, and a cache memory within the processor 301 may function as the storage unit 390 in place of the memory 302 or in conjunction with the memory 302.

The management program can be recorded (stored) in a computer readable format in a non-volatile recording medium such as an optical disc or a flash memory.

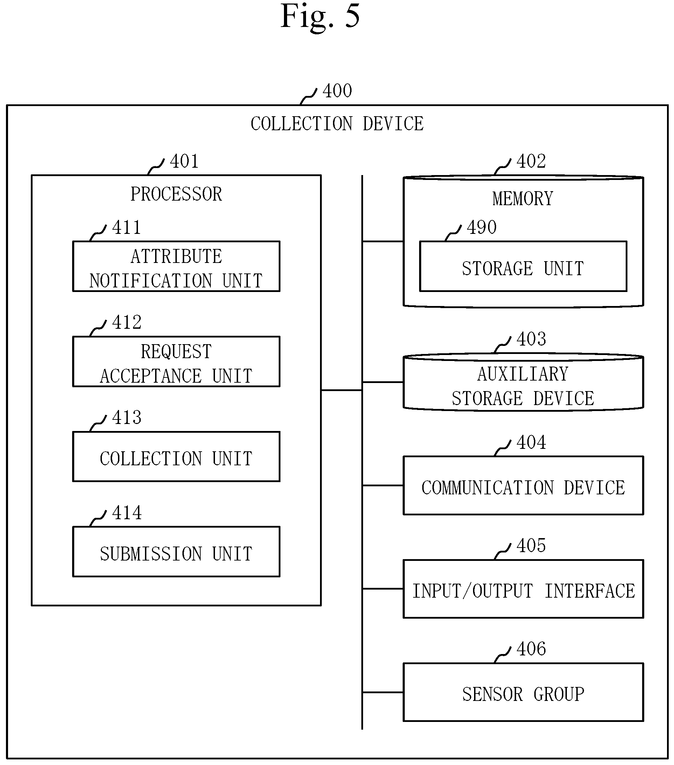

Based on Fig. 5, a configuration of the collection device 400 will be described.

The collection device 400 is a computer that includes hardware such as a processor 401, a memory 402, an auxiliary storage device 403, a communication device 404, an input/output interface 405, and a sensor group 406. These hardware components are connected with one another through signal lines.

Data saved in the memory 402 is stored in the auxiliary storage device 403 as needed.

Data stored in the auxiliary storage device 403 is loaded into the memory 402 as needed.

The collection device 400 communicates using the communication device 404.

Input to and output from the collection device 400 are performed using the input/output interface 405.

The sensor group 406 is composed of one or more sensors. For example, the sensor group 406 includes a satellite positioning sensor, a camera, a microphone, and a 3-axis acceleration sensor.

The satellite positioning sensor is a sensor that uses a satellite positioning system to perform positioning. An example of the satellite positioning system is the Global Positioning System (GPS).

The collection device 400 includes elements such as an attribute notification unit 411, a request acceptance unit 412, a collection unit 413, and a submission unit 414. These elements are realized by software.

The auxiliary storage device 403 stores a collection program to cause a computer to function as the attribute notification unit 411, the request acceptance unit 412, the collection unit 413, and the submission unit 414. The collection program is loaded into the memory 402 and executed by the processor 401.

The auxiliary storage device 403 further stores an OS. At least part of the OS is loaded into the memory 302 and executed by the processor 401.

The processor 401 executes the collection program while executing the OS.

Input data and output data of the collection program are stored in a storage unit 490.

The memory 402 functions as the storage unit 490. However, storage devices such as the auxiliary storage device 403, a register within the processor 401, and a cache memory within the processor 401 may function as the storage unit 490 in place of the memory 402 or in conjunction with the memory 402.

The collection program can be recorded (stored) in a computer readable format in a non-volatile recording medium such as an optical disc or a flash memory.

### *** Description of Operation ***

A procedure for the operation of the information collection system 100 is equivalent to an information collection method. The procedure for the operation of the information collection system 100 is also equivalent to a procedure for processing by an information collection program.

The information collection program includes the request program, the management program, and the collection program.

The information collection method will be described below.

First, the premise of the information collection method will be described.

In each collection device 400, the attribute notification unit 411 transmits attribute information of the collection device 400 to the request device 200.

In the request device 200, the attribute acquisition unit 211 receives the attribute information of each collection device 400, and stores the received attribute information.

The information collection method is executed for each piece of the target equipment 110.

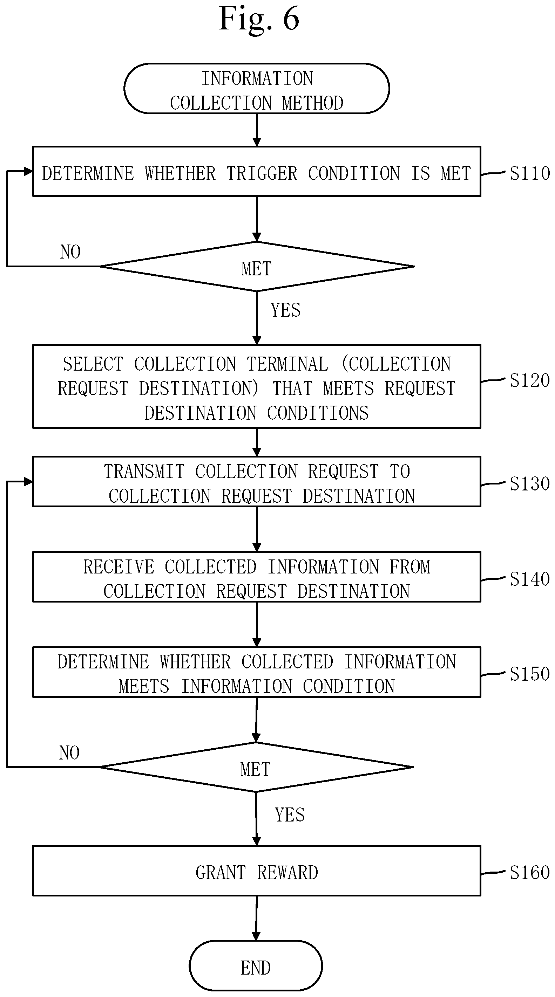

Based on Fig. 6, a procedure for the information collection method will be described.

Step S110 to step S160 are executed repeatedly.

In step S110, the flag generation unit 312 determines whether a trigger condition is met.

The trigger condition is a condition for a trigger for collecting equipment information of the target equipment 110.

A determination on the trigger condition is made as described below.

Trigger condition data is pre-stored in the storage unit 390. The trigger condition data indicates a trigger condition for each piece of the target equipment 110.

The trigger condition indicates a requirement regarding a state of the target equipment 110. The requirement is indicated, for example, using a threshold value such as a Mahalanobis distance. For example, the trigger condition is met when the target equipment 110 is in an anomalous state.

First, the log acquisition unit 311 acquires log data from the target equipment 110.

The log data is data that indicates a state of the target equipment 110. For example, the log data indicates an equipment identifier, an acquisition date and time, control data, measurement data, and so on.

The control data indicates a value (control value) set for each of one or more control parameters.

The measurement data indicates various types of information obtained using the sensor group 111 or the like. For example, the measurement data indicates sound collected by a microphone, 3-axis acceleration measured by a 3-axis acceleration sensor, and so on. If the target equipment 110 is an elevator, the measurement data indicates a time series of movement of an elevator car and so on.

Then, the flag generation unit 312 determines whether the state indicated in the acquired log data meets the requirement indicated in the trigger condition. For example, this determination is made using the Weibull hazard function or artificial intelligence (AI).

If the state indicated in the acquired log data meets the requirement indicated in the trigger condition, the trigger condition is met.

The trigger condition may be passage of a fixed amount of time. In this case, a determination on the trigger condition is made as described below.

If the fixed amount of time has elapsed since the last time when it was determined that the trigger condition was met, the flag generation unit 312 determines that the trigger condition is met.

If it is determined that the trigger condition is met, the flag generation unit 312 sets a collection flag, and notifies the request device 200 that the collection flag has been set.

In the request device 200, the matching unit 212 receives the notification.

Then, processing proceeds to step S120.

In step S120, the matching unit 212 selects a collection device 400 that meets request destination conditions, based on a plurality of pieces of attribute information corresponding to the plurality of collection devices 400.

The request destination conditions are conditions for a request destination to which a request to collect equipment information is to be made

The selected collection device 400 is referred to as a collection request destination.

The collection request destination is selected as described below.

Request destination condition data is pre-stored in the storage unit 290. The request destination condition data indicates request destination conditions for each piece of the target equipment 110.

The request destination conditions indicate requirements regarding a location, a qualification, and an organization. The "qualification" includes a license.

Attribute information indicates a user identifier of the user 101, a user location, a qualification held by the user 101, an organization to which the user 101 belongs, and so on. The user location is, for example, a user address or a location of the collection device 400.

The matching unit 212 selects a collection device 400 corresponding to attribute information that matches the requirements indicated in the request destination conditions. The selected collection device 400 is the collection request destination.

For example, the collection request destination is selected as described below.

The target equipment 110 is installed on the 10th floor of an X apartment building.

A collection device A is the collection device 400 owned by a user A.

The user A resides on the 10th floor of the X apartment building, holds a first-class electrician qualification, and works for M Electric. A first-class electrician is a qualification superior to a second-class electrician.

The attribute information of the collection device A indicates "10th floor, X apartment building" as the location of the user A, indicates "first-class electrician" as the qualification held by the user A, and indicates "M Electric" as the organization to which the user A belongs.

The request destination conditions indicate "10th floor, X apartment building" as a location requirement, indicates "second-class electrician" as a qualification requirement, and indicates "M Electric or S Service" as an organization requirement.

In this case, the attribute information of the collection device A meets the requirements indicated in the request destination conditions.

Therefore, the collection device A is selected as the collection request destination.

The request destination conditions may indicate the requirement for one of the qualification and the organization.

The attribute information may indicate one of the qualification held by the user 101 and the organization to which the user 101 belongs.

In step S130, the request unit 213 transmits a collection request to the collection device 400 that is the collection request destination.

The collection request is data transmitted to request collection of equipment information.

For example, the collection request indicates information indicated in the request destination conditions (location, qualification, organization, etc.) and the collection flag.

In the collection device 400 that is the collection request destination, the request acceptance unit 412 receives the collection request.

In step S140, the collection unit 413 collects equipment information of the target equipment 110.

The equipment information is data that indicates various types of information obtained using the sensor group 406 or the like.

The equipment information includes an equipment identifier, an equipment image, sensor data, and so on. The equipment information may include one of the equipment image and the sensor data.

The equipment image is an image (video or still image) obtained by taking a picture or video of the target equipment 110 using a camera.

The sensor data is data obtained using various sensors in the sensor group 406. For example, the sensor data indicates sound collected by a microphone, vibrations measured by a 3-axis acceleration sensor, and so on as time series data.

For example, the equipment information of the target equipment 110 is collected as described below.

The request acceptance unit 412 displays the collection request on a display.

The user 101 checks the collection request, and moves to the location of the target equipment 110 with the collection device 400. Then, the user 101 activates the camera to take a picture or video of the target equipment 110, and activates various sensors to perform various measurements on the target equipment 110.

As a result, the equipment information of the target equipment 110 is collected.

The collected equipment information is referred to as collected information.

The submission unit 414 transmits the collected information to the request device 200.

In the request device 200, the information acceptance unit 214 receives the collected information.

In step S150, the verification unit 215 determines whether the collected information meets an information condition.

The information condition is a condition for equipment information to be collected.

This determination is made as described below.

Information condition data is pre-stored in the storage unit 290. The information condition data indicates an information condition for each piece of the target equipment 110.

The information condition indicates a requirement for at least one of an image and sensor data.

The verification unit 215 determines whether the equipment information included in the collected information meets the requirement indicated in the information condition.

For example, the following determination is made.

Each of the collected information and the information condition indicates an equipment identifier. If the equipment identifier indicated in the collected information differs from the equipment identifier indicated in the information condition, the verification unit 215 determines that the collected information does not meet the information condition.

Each of the collected information and the information condition indicates an image showing the target equipment 110. If the appearance of the target equipment 110 shown in the image indicated in the collected information differs from the appearance of the target equipment 110 shown in the image indicated in the information condition, the verification unit 215 determines that the collected information does not meet the information condition.

The collected information indicates sensor data, and the information condition indicates a data length. If the data length of the sensor data indicated in the collected information differs from the data length indicated in the information condition, the verification unit 215 determines that the collected information does not meet the information condition. Alternatively, if the data length of the sensor data indicated in the collected information is smaller than the data length indicated in the information condition, the verification unit 215 determines that the collected information does not meet the information condition. A data length may be replaced with a data size.

If the target equipment 110 is an elevator, for example, the collection request indicates a starting floor (1st floor) and an ending floor (10th floor). The information condition indicates a data length corresponding to the travel time of an elevator car from the starting floor to the ending floor.

In accordance with the collection request, the user 101 presses a landing button at the starting floor to initiate an elevator car call and summon the elevator car to the starting floor. Then, the user 101 presses a destination button for the ending floor in the elevator car to move the elevator car to the ending floor.

If a call for the elevator car occurs at an intermediate floor (5th floor) during travel from the starting floor to the ending floor, causing the elevator car to temporarily stop at the intermediate floor, the data length of the sensor data indicated in the collected information becomes longer than the data length indicated in the information condition.

If the user 101 presses a destination button for an intermediate floor (3rd floor), causing the elevator car to travel only to the intermediate floor, the data length of the sensor data indicated in the collected information becomes shorter than the data length indicated in the information condition.

A determination may be made using artificial intelligence (AI).

If it is determined that the collected information does not meet the information condition, processing proceeds to step S130.

Then, the request unit 213 transmits the collection request again to the collection request destination (step S130), the information acceptance unit 214 receives collected information again (step S140), and the verification unit 215 checks again whether the collected information meets the information condition (step S150).

If it is determined that the collected information meets the information condition, the verification unit 215 transmits a verification result indicating that the collected information meets the information condition to the management device 300. In the management device 300, the flag deletion unit 313 receives the verification result and deletes the collection flag. Then, processing proceeds to step S160.

In step S160, the reward granting unit 216 grants a reward to the owner of the collection device 400 that is the collection request destination.

The reward is granted as described below.

Owner data is pre-stored in the storage unit 290. The owner data indicates owner information for each collection device 400.

The owner information is information about the owner of the collection device 400.

First, the reward granting unit 216 determines the reward based on the amount of information in the collected data.

For example, the reward granting unit 216 calculates the amount or the number of points to be granted as the reward by multiplying each amount of information, such as the number of images indicated in the collected data and the data length of sensor data indicated in the collected data, by a coefficient corresponding to the type of information.

Then, the reward granting unit 216 grants the reward to the owner of the collection device 400 that is the collection request destination, based on the owner information of the collection device 400 that is the collection request destination.

### *** Features of Embodiment 1 ***

The request device 200 matches request destination conditions for information collection with the attribute information of the user 101.

The management device 300 generates a collection flag based on log data of the target equipment 110, and the request device 200 issues a collection request based on the collection flag.

The request device 200 verifies the consistency between equipment information collected by the collection device 400 and an information condition of the target equipment 110 to determine whether re-collection is needed. This reduces the time and effort required by the requester and the user 101.

### *** Effects of Embodiment 1 ***

Embodiment 1 allows a photographer (user 101) to accept a shooting request (collection request) with peace of mind. Moreover, since a flow from a shooting request to receipt of a shooting result is automated, the burden on both a requester and the photographer can be reduced.

In Embodiment 1, the personal data (attribute information) of the photographer is matched with request conditions for information collection. This makes it possible to eliminate the risk of trespassing.

In Embodiment 1, a collection flag is issued automatically. This eliminates the need to issue a shooting request upon each collection trigger, thus reducing the burden on the requester.

In Embodiment 1, it is automatically verified whether the collected information is information that is required. This makes it possible to immediately return a re-collection request to the photographer.

Therefore, the photographer can take a picture or video of equipment with peace of mind, and the burden on the requester and the photographer when using the system can be reduced.

### *** Implementation Example of Embodiment 1 ***

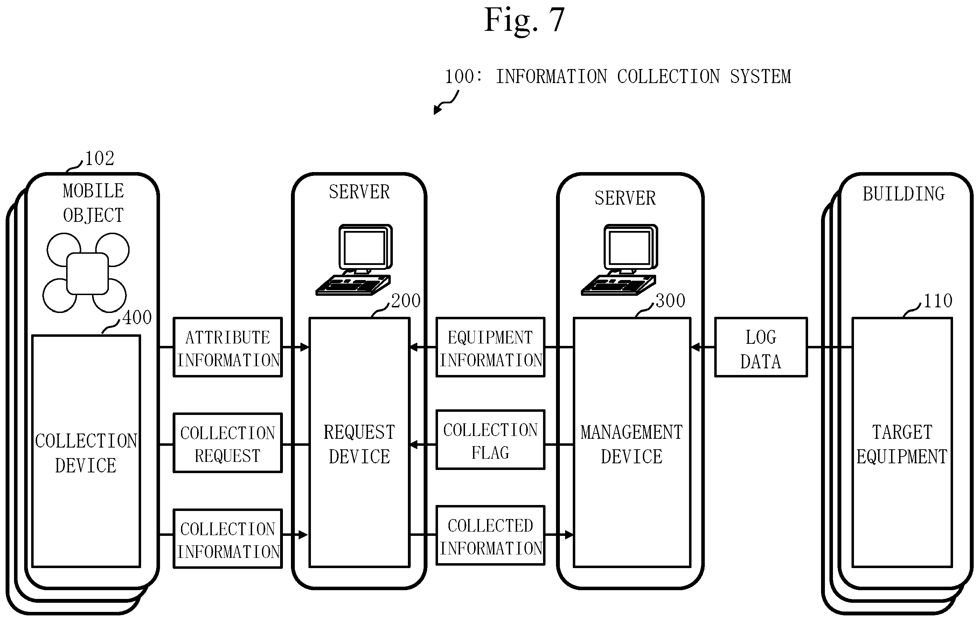

As illustrated in Fig. 7, the collection device 400 may be a device mounted on a mobile object 102.

The mobile object 102 is a mobile object that moves automatically. For example, the mobile object 102 is a robot or a drone. For example, a security robot or a delivery robot is used as the mobile object 102. The use of the mobile object 102 makes it possible to reduce the workload of a photographer.

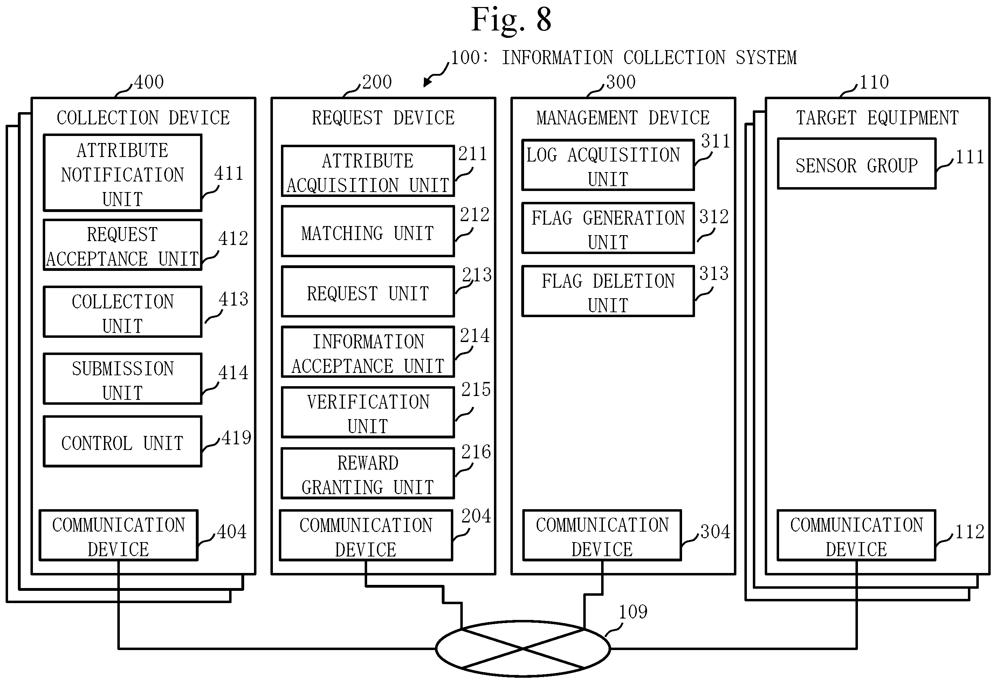

Fig. 8 illustrates a functional configuration of the collection device 400 mounted on the mobile object 102.

The collection device 400 further includes a control unit 419.

The collection program further causes a computer to function as the control unit 419.

When equipment information is to be collected, the control unit 419 controls a drive device (steering device, motor, etc.) of the mobile object 102 to move the mobile object 102 to the location of the target equipment 110. The location of the target equipment 110 is indicated in the collection request.

The procedure for the information collection method is substantially the same as the procedure described in Fig. 6.

However, the attribute information indicates functions of the collection device 400, instead of the qualification held by the user 101 and the organization to which the user 101 belongs. For example, the attribute information indicates performance of a camera, a type of a sensor, a range of movement of the mobile object 102, and so on.

The request destination conditions indicate functional requirements, instead of qualification and organization requirements

### *** Supplement to Embodiment 1 ***

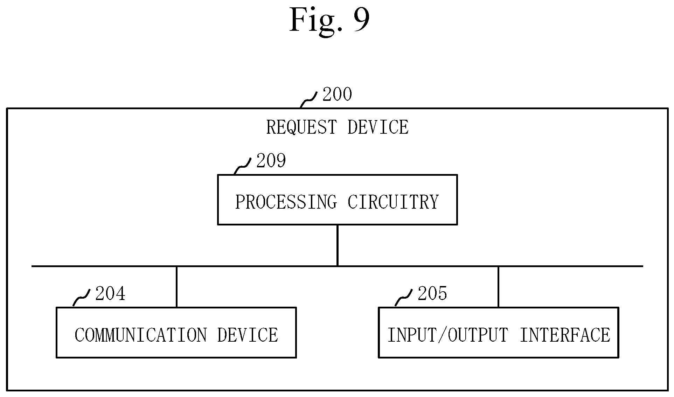

Based on Fig. 9, a hardware configuration of the request device 200 will be described.

The request device 200 includes processing circuitry 209.

The processing circuitry 209 is processing circuitry that realizes the attribute acquisition unit 211, the matching unit 212, the request unit 213, the information acceptance unit 214, the verification unit 215, and the reward granting unit 216.

The processing circuitry is hardware.

The processing circuitry may be dedicated hardware or may be a processor that executes programs stored in a memory.

When the processing circuitry is dedicated hardware, for example, the processing circuitry is a single circuit, a composite circuit, a programmed processor, parallel-programmed processors, an ASIC, an FPGA, or a combination of these.

ASIC is an abbreviation for application specific integrated circuit.

FPGA is an abbreviation for field programmable gate array.

The request device 200 may include a plurality of processing circuits as an alternative to the processing circuitry 209.

In the processing circuitry 209, some functions may be realized by dedicated hardware, and the remaining functions may be realized by software or firmware.

As described above, the functions of the request device 200 can be realized by hardware, software, firmware, or a combination of these.

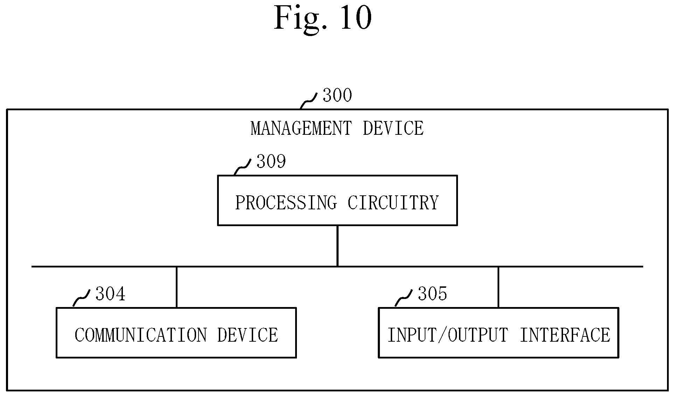

Based on Fig. 10, a hardware configuration of the management device 300 will be described.

The management device 300 includes processing circuitry 309.

The processing circuitry 309 is processing circuitry that realizes the log acquisition unit 311, the flag generation unit 312, and the flag deletion unit 313.

The management device 300 may include a plurality of processing circuits as an alternative to the processing circuitry 309.

In the processing circuitry 309, some functions may be realized by dedicated hardware, and the remaining functions may be realized by software or firmware.

As described above, the functions of the management device 300 can be realized by hardware, software, firmware, or a combination of these.

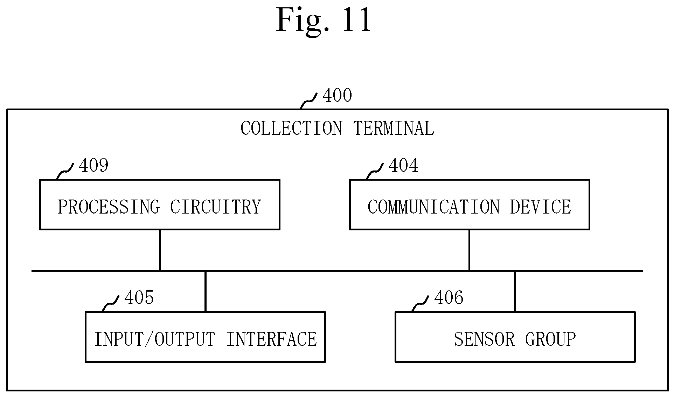

Based on Fig. 11, a hardware configuration of the collection device 400 will be described.

The collection device 400 includes processing circuitry 409.

The processing circuitry 409 is processing circuitry that realizes the attribute notification unit 411, the request acceptance unit 412, the collection unit 413, the submission unit 414, and the control unit 419.

The collection device 400 may include a plurality of processing circuits as an alternative to the processing circuitry 409.

In the processing circuitry 409, some functions may be realized by dedicated hardware, and the remaining functions may be realized by software or firmware.

As described above, the functions of the collection device 400 can be realized by hardware, software, firmware, or a combination of these.

Embodiment 1 is an example of a preferred embodiment and is not intended to limit the technical scope of the present disclosure. Embodiment 1 may be implemented partially, or may be implemented in combination with another embodiment. The procedures described using the flowcharts or the like may be suitably modified.

"Unit" of each element of the request device 200, the management device 300, and the collection device 400 may be interpreted as "process", "step", "circuit", or "circuitry".

### Reference Signs List

100: information collection system; 101: user; 102: mobile object; 109: communication network; 110: target equipment; 111: sensor group; 112: communication device; 200: request device; 201: processor; 202: memory; 203: auxiliary storage device; 204: communication device; 205: input/output interface; 209: processing circuitry; 211: attribute acquisition unit; 212: matching unit; 213: request unit; 214: information acceptance unit; 215: verification unit; 216: reward granting unit; 290: storage unit; 300: management device; 301: processor; 302: memory; 303: auxiliary storage device; 304: communication device; 305: input/output interface; 309: processing circuitry; 311: log acquisition unit; 312: flag generation unit; 313: flag deletion unit; 390: storage unit; 400: collection device; 401: processor; 402: memory; 403: auxiliary storage device; 404: communication device; 405: input/output interface; 406: sensor group; 409: processing circuitry; 411: attribute notification unit; 412: request acceptance unit; 413: collection unit; 414: submission unit; 419: control unit; 490: storage unit.

## Claims

1. An information collection system comprising:
a matching unit to select, as a collection request destination, a collection device that meets a request destination condition, which is a condition for a request destination to which collection of equipment information of target equipment is to be requested, based on a plurality of pieces of attribute information corresponding to a plurality of collection devices; and
a request unit to transmit a collection request to request collection of the equipment information to the collection request destination.

2. The information collection system according to claim 1,
wherein each of the plurality of collection devices is a terminal owned by a user,
wherein the attribute information of each of the plurality of collection devices indicates at least one of a qualification held by the user and an organization to which the user belongs,
wherein the request destination condition indicates a requirement regarding at least one of a qualification and an organization, and
wherein the matching unit selects, as the request destination condition, the collection device that corresponds to attribute information that matches the requirement indicated in the request destination condition.

3. The information collection system according to claim 1,
wherein each of the plurality of collection devices is a device mounted on a mobile object that moves automatically,
wherein the attribute information of each of the plurality of collection devices indicates a function of the collection device,
wherein the request destination condition indicates a requirement regarding a function, and
wherein the matching unit selects, as the collection request destination, the collection device that corresponds to the attribute information that matches the requirement indicated in the request destination condition.

4. The information collection system according to any one of claim 1 to claim 3, further comprising
a flag generation unit to determine whether a trigger condition, which is a condition for a trigger for collecting equipment information of target equipment, is met,
wherein when it is determined that the trigger condition is met, the matching unit selects the collection request destination.

5. The information collection system according to claim 4, further comprising
a log acquisition unit to acquire log data that indicates a state of the target equipment,
wherein the trigger condition indicates a requirement regarding a state of the target equipment, and
wherein the flag generation unit determines whether the state indicated in the acquired log data meets the requirement indicated in the trigger condition.

6. The information collection system according to any one of claim 1 to claim 5, further comprising
a verification unit to determine whether collected information transmitted from the collection request destination meets an information condition, which a condition for equipment information to be collected.

7. The information collection system according to claim 6,
wherein the collected information includes, as the equipment information, at least one of an equipment image obtained by capturing an image of the target equipment and sensor data obtained using a sensor included in the collection device,
wherein the information condition indicates a requirement regarding at least one of an equipment image and sensor data, and
wherein the verification unit determines whether the equipment information included in the collected information meets the requirement indicated in the information condition.

8. The information collection system according to claim 6 or claim 7, further comprising
a reward granting unit to grant a reward to an owner of the collection device that is the collection request destination when it is determined that the collected information meets the information condition.

9. The information collection system according to claim 8,
wherein the reward granting unit determines the reward based on an amount of information of the collected information.

10. The information collection system according to any one of claim 6 to claim 9,
wherein when it is determined that the collected information does not meet the information condition, the request unit transmits the collection request again to the collection request destination.

11. A request device comprising:
a matching unit to select, as a collection request destination, a collection device that meets a request destination condition, which is a condition for a request destination to which collection of equipment information of target equipment is to be requested, based on a plurality of pieces of attribute information corresponding to a plurality of collection devices; and
a request unit to transmit a collection request to request collection of the equipment information to the collection request destination.

12. An information collection method comprising:
selecting, as a collection request destination, a collection device that meets a request destination condition, which is a condition for a request destination to which collection of equipment information of target equipment is to be requested, based on a plurality of pieces of attribute information corresponding to a plurality of collection devices; and
transmitting a collection request to request collection of the equipment information to the collection request destination.

13. An information collection program to cause a computer to execute:
a matching process of selecting, as a collection request destination, a collection device that meets a request destination condition, which is a condition for a request destination to which collection of equipment information of target equipment is to be requested, based on a plurality of pieces of attribute information corresponding to a plurality of collection devices; and
a request process of transmitting a collection request to request collection of the equipment information to the collection request destination.
